Europäisches Patentamt

(19) European Patent Office

Office européen des brevets

(11) EP 0 771 167 B1

(12) **FASCICULE DE BREVET EUROPEEN**

(45) Date de publication et mention
de la délivrance du brevet:
**07.10.1998 Bulletin 1998/41**

(21) Numéro de dépôt: **95925021.8**

(22) Date de dépôt: **07.07.1995**

(51) Int. Cl.$^6$: **A47L 9/28**

(86) Numéro de dépôt international:
**PCT/FR95/00909**

(87) Numéro de publication internationale:
**WO 96/02179 (01.02.1996 Gazette 1996/06)**

(54) **ASPIRATEUR DE POUSSIERES COMPORTANT UNE UNITE DE COMMANDE A LOGIQUE FLOUE**

STAUBSAUGER MIT FUZZY LOGIC STEUERUNG

VACUUM CLEANER WITH FUZZY LOGIC CONTROL UNIT

(84) Etats contractants désignés:
**DE ES GB IT NL SE**

(30) Priorité: **13.07.1994 FR 9408705**

(43) Date de publication de la demande:
**07.05.1997 Bulletin 1997/19**

(73) Titulaire: **MOULINEX S.A.**
**75008 Paris (FR)**

(72) Inventeur: **DESCHENES, Laurent**
**F-14280 Saint-Germain-la-Blanche-Herbe (FR)**

(74) Mandataire:
**Busquets, Jean-Pierre et al**
**Groupe Moulinex C.E.R.,**
**Direction de la Propriété Industrielle,**
**8 Rue du Colonel Rémy**
**14052 Caen Cédex (FR)**

(56) Documents cités:
**EP-A- 0 458 057** **US-A- 4 731 898**

- **PATENT ABSTRACTS OF JAPAN vol. 16, no. 140 (C-0926) 8 Avril 1992 & JP,A,03 297 432 (HITACHI LTD) 27 Décembre 1991**
- **PATENT ABSTRACTS OF JAPAN vol. 16, no. 512 (C-0998) 22 Octobre 1992 & JP,A,04 193 244 (MATSUSHITA ELECTRIC IND CO LTD) 13 Juillet 1992**
- **PATENT ABSTRACTS OF JAPAN vol. 15, no. 221 (C-0838) 6 Juin 1991 & JP,A,03 066 345 (MATSUSHITA ELECTRIC IND CO LTD) 22 Mars 1991**
- **PATENT ABSTRACTS OF JAPAN vol. 18, no. 12 (C-1150) 11 Janvier 1994 & JP,A,05 253 149 (MATSUSHITA ELECTRIC IND CO LTD) 5 Octobre 1993**
- **PATENT ABSTRACTS OF JAPAN vol. 17, no. 482 (C-1105) 2 Septembre 1993 & JP,A,05 123 276 (MATSUSHITA ELECTRIC IND CO LTD) 21 Mai 1993**
- **PATENT ABSTRACTS OF JAPAN vol. 18, no. 111 (C-1170) 23 Février 1994 & JP,A,05 305 047 (AMANO CO) 19 Novembre 1993**

**Description**

La présente invention se rapporte aux aspirateurs qui comportent un boîtier comprenant un compartiment à poussières logeant un sac à poussières, et un compartiment d'aspiration communiquant avec le compartiment à poussières par un orifice d'écoulement d'air et comportant un groupe moto-ventilateur ; et un tuyau d'aspiration dont l'une des extrémités communique avec le sac à poussières par un orifice de raccordement pratiqué dans le boîtier et dont l'autre extrémité est couplée à un organe suceur présentant une ouverture d'aspiration.

Elle concerne, plus précisément, les aspirateurs qui comprennent en outre un dispositif de commande automatique de la puissance du groupe moto-ventilateur, du type comportant des moyens de détection de la nature du sol et des moyens de commande à logique floue.

Dans de tels aspirateurs de poussières connus dits à logique floue, les moyens de détection de la nature du sol comportent généralement un capteur de la dépression existant entre le groupe moto-ventilateur et le compartiment à poussières, l'inférence floue étant alors réalisée sur la dépression détectée de manière à commander automatiquement la puissance du groupe moto-ventilateur suivant le résultat de cette inférence floue. Si de tels aspirateurs à logique floue présentent effectivement une bonne régulation automatique de la puissance du groupe moto-ventilateur grâce à la dépression détectée, leur puissance par contre n'est pas du tout adaptée automatiquement en fonction de la nature du sol rencontré et d'un effort de poussée acceptable pour l'utilisateur, réduisant ainsi notablement l'efficacité de l'aspirateur, ainsi que le confort de travail de l'utilisateur. En effet, le problème qui se pose réside dans le fait que, sur certains types de revêtement de sol (moquette ou tapis épais), l'accessoire d'aspiration devient trop dur à pousser en raison de la "charge" trop importante due à la dépression qui tend à coller l'accessoire sur la moquette ou tapis, d'où un effort de poussée et une fatigue tout à fait inacceptables pour l'utilisateur.

L'invention a en particulier pour but de remédier à ces inconvénients et de réaliser, d'une manière simple et efficace, un aspirateur de poussières à logique floue, du type exposé ci-dessus, dont la puissance du groupe moto-ventilateur soit adaptée automatiquement en fonction de la nature du sol rencontré tout en offrant à l'utilisateur un effort de poussée de l'organe suceur qui soit parfaitement admissible pour nettoyer dans les meilleures conditions possibles.

Selon l'invention, le dispositif de commande automatique comporte en outre des moyens de détection du déplacement dynamique de l'organe suceur, et les moyens de commande à logique floue sont adaptés à réaliser une inférence floue sur la sortie des moyens de détection de la nature du sol et sur la sortie des moyens de détection du déplacement dynamique de l'organe suceur de manière à commander la puissance du groupe moto-ventilateur suivant le résultat de ladite inférence.

Ainsi, grâce à cette combinaison des moyens de détection de la nature du sol et des moyens de détection du déplacement dynamique de l'organe suceur, la puissance de l'aspirateur à logique floue et, de manière concomitante, l'effort de déplacement de l'organe suceur, sont parfaitement adaptés quelle que soit la nature du sol rencontré.

De préférence, les moyens de détection du déplacement dynamique de l'organe suceur sont constitués par des moyens de détection de la vitesse moyenne dudit organe suceur.

L'invention a également pour but de réaliser une adaptation automatique de la puissance du groupe moto-ventilateur de l'aspirateur, non seulement en fonction de la nature du sol et de l'effort de déplacement de l'organe suceur exercé par l'utilisateur, mais également en fonction du degré de colmatage du sac à poussières.

Ainsi, selon une particularité de l'invention, les moyens de détection de la nature du sol comportent un capteur de la dépression existant entre le groupe moto-ventilateur et le compartiment à poussières, et le dispositif de commande automatique comporte de plus des moyens permettant de calculer séquentiellement une valeur dite de diaphragme, définie en fonction de l'ouverture d'aspiration de l'organe suceur et représentative de la nature du sol et du degré de colmatage du sac à poussières, au moyen d'un calculateur apte à déterminer successivement : le débit d'air du groupe moto-ventilateur à partir d'une première table de correspondance entre la dépression et la tension de commande du groupe moto-ventilateur ; un paramètre dit aéraulique obtenu à partir d'une seconde table de correspondance entre la dépression et le débit d'air ; et le diaphragme corrélé au paramètre aéraulique précédemment déterminé, l'inférence floue utilisant le diaphragme et la vitesse moyenne de l'organe suceur comme variables d'entrée et élaborant comme variable de commande la tension de commande du groupe moto-ventilateur, cette tension de commande étant appliquée en contre-réaction aux moyens de calcul du diaphragme.

Les caractéristiques et avantages de l'invention ressortiront d'ailleurs de la description qui va suivre d'un mode particulier pris à titre d'exemple non limitatif, en référence aux dessins annexés dans lesquels :

- la figure 1 est une vue schématique partielle en perspective d'un aspirateur de poussières selon l'invention ;
- la figure 2 est une vue schématique agrandie en coupe longitudinale d'un boîtier de l'aspirateur de la figure 1 ;
- la figure 3 est un schéma bloc d'un dispositif de commande automatique de l'aspirateur de la figure 1 ;
- la figure 4 est une vue schématique agrandie en coupe transversale d'un organe suceur de l'aspirateur de la figure 1 ;
- la figure 5 représente un réseau de caractéristiques de la dépression en fonction du débit d'air pour différentes tensions du groupe moto-ventilateur illustré à la figure 2 ;

- les figures 6, 7 et 8 représentent des courbes des fonctions d'appartenance utilisées dans la commande floue de l'aspirateur et relatives respectivement aux deux variables d'entrée (vitesse, figure 6 et diaphragme, figure 7) et à la variable de commande (tension, figure 8) ;
- les figures 9 et 10 sont des vues analogues respectivement aux figures 6 et 7, dans le cadre d'un exemple numérique ; et
- la figure 11 montre, à partir de la courbe de la fonction d'appartenance de la tension de commande illustrée à la figure 8, la détermination de la valeur de la tension de commande résultant de l'inférence floue.

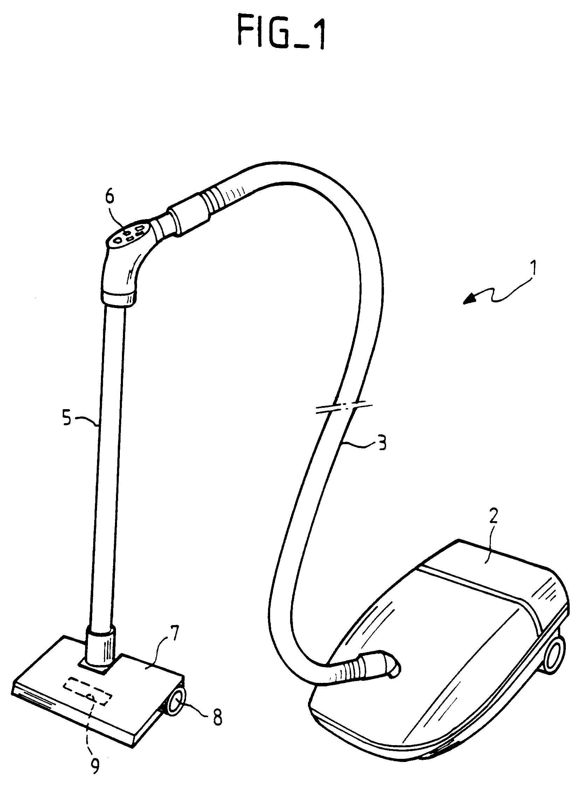

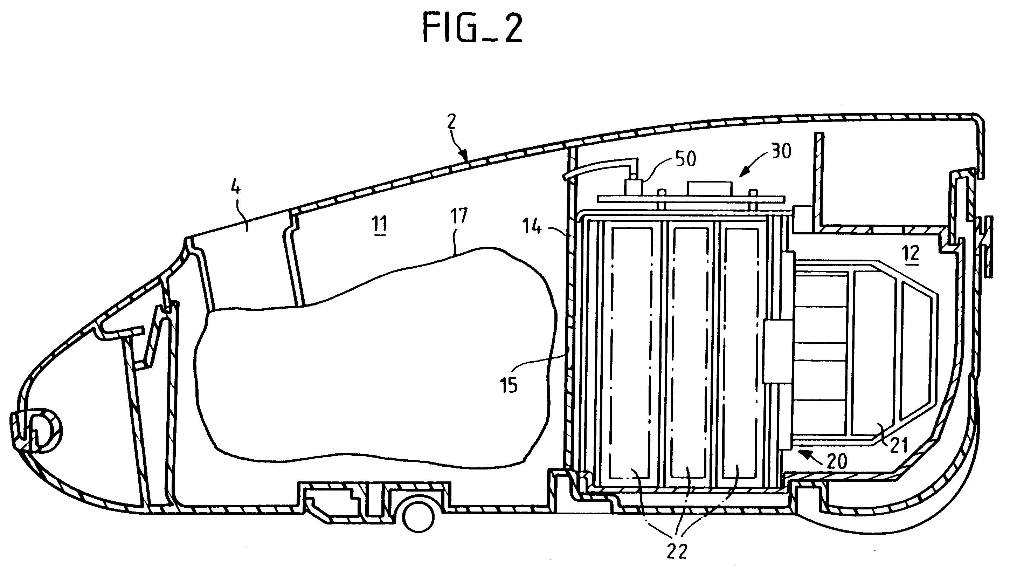

Dans l'exemple de réalisation illustré schématiquement à la figure 1, l'aspirateur de poussières 1 dit à logique floue est un aspirateur traîneau qui comprend un boîtier principal 2, deux tubes raccordés d'aspiration, à savoir un tube flexible 3 branché dans un orifice 4 (figure 2) pratiqué à l'avant de la partie supérieure du boîtier 2, et un tube rigide 5 pourvu d'une poignée 6 à touches de commande, ainsi qu'un organe suceur 7 doté de roulettes 8 dont une seule est visible sur la figure 1, raccordé sur l'extrémité libre du tube rigide 5 et présentant une ouverture d'aspiration 9 représentée en pointillés sur la figure 1.

Dans un mode d'exécution nullement limitatif illustré à la figure 2, le boîtier 2 de l'aspirateur comporte deux compartiments 11 et 12 séparés l'un de l'autre par une cloison verticale 14 et communiquant l'un avec l'autre par un orifice d'écoulement d'air 15 pratiqué dans la cloison 14, à savoir :

- un compartiment à poussières 11 logeant un sac à poussières 17 monté amovible, d'une manière connue en soi, en communication avec l'orifice 4 ;
- un compartiment d'aspiration 12 contenant un groupe moto-ventilateur 20 comprenant un moteur 21 et au moins un ventilateur 22, en l'occurrence trois ventilateurs.

Sur cette figure 2, on a illustré schématiquement par la référence générale 30 un dispositif de commande automatique de l'aspirateur, agencé dans le compartiment d'aspiration 12 du boîtier 2 et destiné à ajuster automatiquement par logique floue la puissance du groupe moto-ventilateur 20 de l'aspirateur en fonction des conditions d'utilisation de ce dernier, à savoir : la nature du sol rencontré, le degré de colmatage du sac à poussières 17 et l'effort de poussée exercé par l'utilisateur sur l'organe suceur 7.

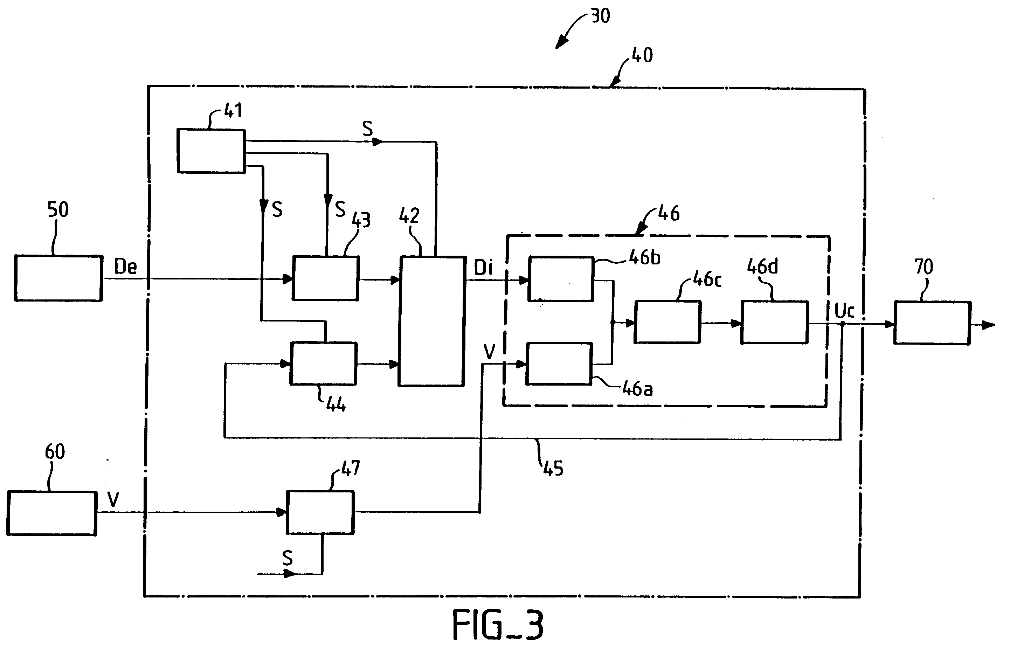

La figure 3 représente sous forme d'un schéma bloc le dispositif 30 de commande automatique de la puissance du groupe moto-ventilateur de l'aspirateur, conforme à l'invention, que l'on va maintenant décrire.

Sur cette figure 3, le dispositif de commande automatique 30 se présente sous la forme générale d'un microcontrôleur 4 bits représenté en 40 par des traits mixtes, qui comprend une horloge interne 41 générant périodiquement, par exemple toutes les 500 millisecondes, un signal d'horloge S, et qui reçoit à ce cadencement, d'une part, une première information, notée De, représentative de la nature du sol rencontré et correspondant à la dépression qui existe entre le groupe moto-ventilateur 20 et le compartiment à poussières 11 de l'aspirateur et qui est recueillie par des moyens 50 de détection de la nature du sol et comportant à cet effet un capteur différentiel de pression, de structure connue en soi (voir figure 2), et d'autre part, une seconde information, notée V, représentative de l'effort de poussée exercé par l'utilisateur sur l'organe suceur 7 et correspondant à la vitesse moyenne de déplacement de l'organe suceur qui est fournie par des moyens 60 montés sur ledit organe suceur 7 et adaptés à détecter la vitesse moyenne de ce dernier.

On notera que les moyens 60 de détection de la vitesse moyenne de l'organe suceur peuvent être remplacés par tout autre moyen apte à détecter le déplacement dynamique de l'organe suceur 7, ce déplacement dynamique étant caractérisé par exemple par l'accélération de l'organe suceur ou encore par la force exercée sur l'organe suceur, sans sortir pour cela du cadre de l'invention.

Le microcontrôleur 40, figure 3, élabore en sortie un signal, noté $U_C$, représentatif de la tension de commande qui est à appliquer au groupe moto-ventilateur 20 (figure 2) pour régler la puissance de ce dernier, par l'intermédiaire d'un organe de commande 70, tel qu'un triac.

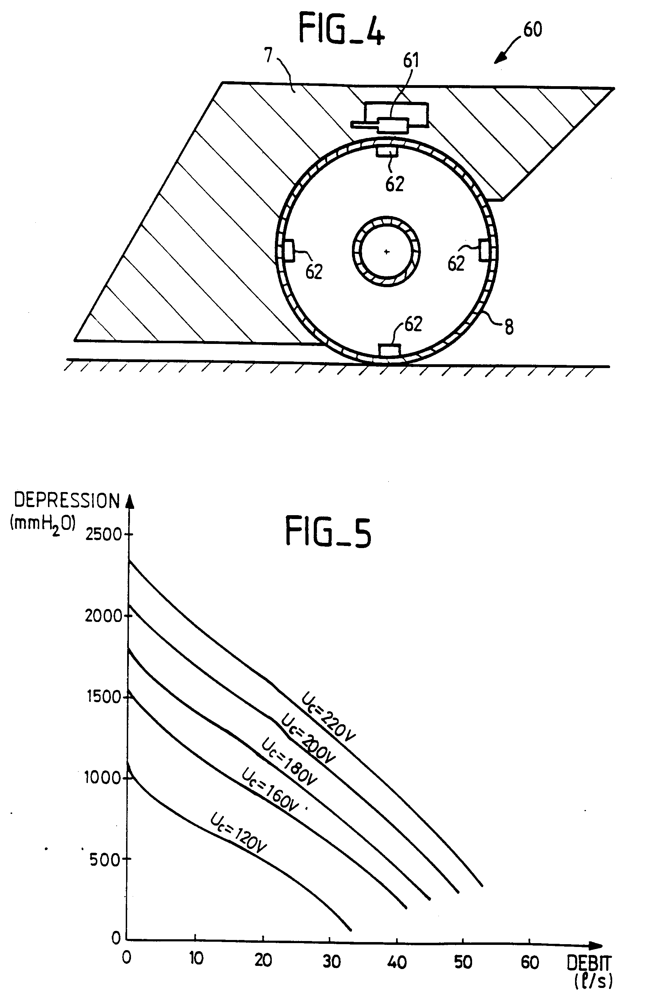

Dans un mode de réalisation nullement limitatif représenté sur la figure 4, les moyens 60 de détection de la vitesse moyenne de l'organe suceur 7 comportent un capteur à effet Hall 61 placé dans l'organe suceur 7, tangentiellement à l'une des roulettes 8, et une pluralité d'aimants 62, par exemple au nombre de quatre, répartis régulièrement sur la circonférence de ladite roulette 8. La vitesse moyenne de l'organe suceur 7 par rapport au sol est calculée par tout moyen approprié de comptage du nombre d'impulsions créées pendant une durée donnée par passage des aimants 62 devant le capteur à effet Hall 61 ; l'image de cette vitesse moyenne ainsi calculée représente l'effort de déplacement de l'organe suceur 7 sur le sol rencontré.

En référence à la figure 3, le microcontrôleur 40 comporte des moyens 42 permettant de calculer périodiquement à partir du signal d'horloge S, une valeur dite de diaphragme équivalent au degré de fermeture de l'orifice d'aspiration 9 de l'organe suceur 7 (figure 1), qui est représentative de la nature du sol rencontré et du degré de colmatage du sac à poussières 17 (figure 2), et dont la détermination sera explicitée par la suite. Ces moyens 42 de calcul du diaphragme présentent une première entrée reliée à un premier filtre numérique 43, connu en soi, destiné à filtrer la dépression De mesurée par le capteur de pression 50, une seconde entrée reliée à un second filtre numérique 44 destiné à filtrer la tension de commande élaborée $U_C$ via une liaison de contre-réaction 45, et constituant en soi une ligne à retard permettant de tenir compte de la propre inertie du groupe moto-ventilateur, et une sortie délivrant le diaphragme calculé, noté Di.

Plus précisément, les moyens 42 de calcul du diaphragme sont constitués par un calculateur propre à déterminer successivement :

- le débit d'air, noté Da (en l/s), du groupe moto-ventilateur 20 (figure 2) à partir d'une table de correspondance, établie notamment par un abaque du type représenté à la figure 5, entre la dépression De (variant de 0 à 2500 mm à la colonne d'eau) et la tension de commande $U_C$ établie de 120 à 220 Volts ;
- un paramètre dit aéraulique, noté coef. k, qui est caractéristique de la charge aéraulique "vue" par le groupe moto-ventilateur, et qui est obtenu à partir d'une table de correspondance entre la dépression De et le débit d'air Da, conformément à la relation suivante :

$$\text{coef. } k = \frac{De}{(Da)^2}$$

- le diaphragme Di, exprimé en millimètres, qui est obtenu par corrélation, suivant une équation linéaire approximée par une droite en coordonnées logarithmiques, avec le paramètre coef. k défini ci-dessus.

Sur la figure 3, le microcontrôleur 40 comporte de plus une unité 46 de commande à logique floue recevant deux variables d'entrée, à savoir le diaphragme Di et la vitesse moyenne V, filtrée par un filtre numérique 47 connu en soi, de l'organe suceur, et élaborant la variable de commande, en l'occurrence la tension de commande $U_C$ à appliquer au groupe moto-ventilateur de l'aspirateur en vue de régler la puissance de ce dernier en fonction des conditions d'utilisation.

Cette unité 46 de commande à logique floue comporte des moyens 46a propres à déterminer, à partir de la fonction d'appartenance relative à la vitesse de l'organe suceur, le degré d'appartenance pour chaque prédicat de la vitesse, des moyens 46b propres à déterminer, à partir de la fonction d'appartenance relative au diaphragme, le degré d'appartenance pour chaque prédicat du diaphragme, un moteur d'inférence floue 46c utilisant par exemple la méthode MIN-MAX et permettant, à partir de l'élaboration des règles de commande et à partir de la fonction d'appartenance relative à la tension de commande $U_C$, de déterminer le degré d'appartenance pour chaque prédicat de la tension de commande, ainsi que des moyens 46d dits de levée du flou et propres à déterminer la valeur de la tension de commande à appliquer au groupe moto-ventilateur de l'aspirateur.

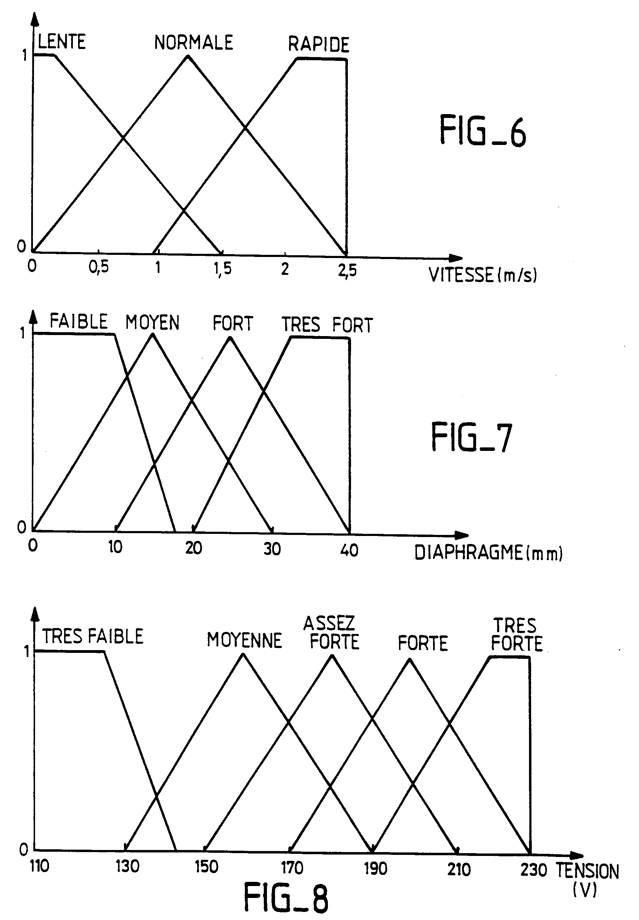

La figure 6 représente la fonction d'appartenance de la vitesse (comprise par exemple entre 0 et 2,5 m/s) de l'organe suceur, définie expérimentalement et ayant trois prédicats, à savoir "Lente", "Normale" et "Rapide". La figure 7 représente aussi la fonction d'appartenance du diaphragme (compris par exemple entre 0 et 40 mm), définie expérimentalement et ayant quatre prédicats, à savoir "Faible", "Moyen", "Fort" et "Très Fort". La figure 8 représente également la fonction d'appartenance de la tension de commande (comprise entre 110 et 230 V) du groupe moto-ventilateur, définie expérimentalement et ayant par exemple cinq prédicats, à savoir "Très Faible", "Moyenne", "Assez Forte", "Forte" et "Très Forte".

Les règles de commande élaborées à partir d'expériences et transcrites en utilisant les descriptions floues des trois variables, respectivement la vitesse (figure 6), le diaphragme (figure 7) et la tension de commande (figure 8) peuvent être établies sous la forme du tableau ci-dessous.

| DIAPHRAGME / VITESSE | FAIBLE | MOYEN | FORT | TRES FORT |
|---|---|---|---|---|
| LENTE | FORTE · | MOYENNE | TRES FAIBLE | MOYENNE |
| NORMALE | TRES FORTE | ASSEZ FORTE | MOYENNE | FORTE |
| RAPIDE | TRES FORTE | TRES FORTE | TRES FORTE | TRES FORTE |

Ces différentes règles de commande peuvent s'énoncer de la façon suivante, à partir de ce tableau :

- Règle 1 : Si la vitesse est lente et le diaphragme est faible, alors la tension de commande est forte.
- Règle 2 : Si la vitesse est normale et le diaphragme est faible, alors la tension de commande est très forte.
- Règle 3 : Si la vitesse est rapide et le diaphragme est faible, alors la tension de commande est très forte.
- Règle 4 : Si la vitesse est lente et le diaphragme est moyen, alors la tension de commande est moyenne.
- Règle 5 : Si la vitesse est normale et le diaphragme est moyen, alors la tension de commande est assez forte.
- Règle 6 : Si la vitesse est rapide et le diaphragme est moyen, alors la tension de commande est très forte.
- Règle 7 : Si la vitesse est lente et le diaphragme est fort, alors la tension de commande est très faible.
- Règle 8 : Si la vitesse est normale et le diaphragme est fort, alors la tension de commande est moyenne.
- Règle 9 : Si la vitesse est rapide et le diaphragme est fort, alors la tension de commande est très forte.
- Règle 10 : Si la vitesse est lente et le diaphragme est très fort, alors la tension de commande est moyenne.
- Règle 11 : Si la vitesse est normale et le diaphragme est très fort, alors la tension de commande est forte.
- Règle 12 : Si la vitesse est rapide et le diaphragme est très fort, alors la tension de commande est très forte.

En regard de la figure 3, le fonctionnement du dispositif de commande automatique 30 de l'aspirateur, conforme à l'invention, est le suivant.

D'une manière périodique coordonnée par l'horloge 41, les moyens 50 de détection de la nature du sol rencontré délivrent un signal qui est représentatif de la dépression $\underline{De}$ existant entre le groupe moto-ventilateur 20 et le compartiment à poussières 11 de l'aspirateur (figure 2) et qui est appliqué, après filtrage, aux moyens 42 de calcul du diaphragme Di, tandis que les moyens 60 de détection de la vitesse moyenne de l'organe suceur délivrent un signal qui est représentatif de ladite vitesse moyenne mesurée V et qui est appliqué, après filtrage, à l'une des deux entrées de l'unité 46 de commande à logique floue.

Simultanément, le signal représentatif de la tension de commande $U_C$ alimentant le groupe moto-ventilateur de l'aspirateur est appliqué en contre-réaction, via la liaison 45 et après filtrage, aux moyens 42 de calcul du diaphragme Di.

Par application du processus de calcul du diaphragme faisant intervenir, comme on l'a décrit plus haut, la détermination du débit d'air du groupe moto-ventilateur, puis la détermination du paramètre aéraulique et enfin la détermination du diaphragme corrélé audit paramètre aéraulique, le calculateur 42 délivre un signal qui est représentatif du diaphragme calculé Di et qui est appliqué à l'autre entrée de l'unité 46 de commande à logique floue.

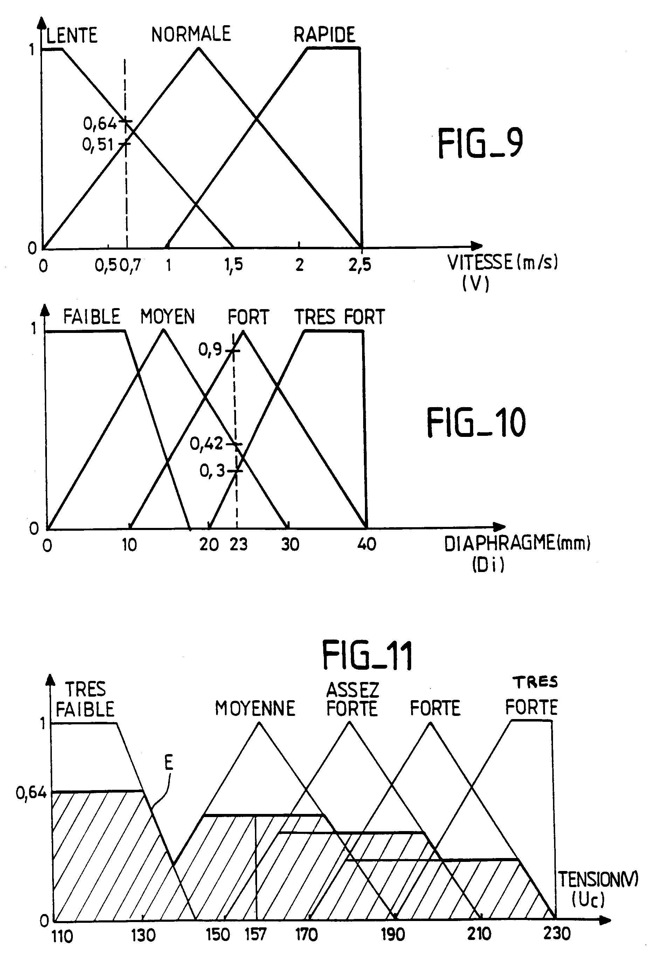

Dans un souci de compréhension, on va maintenant décrire les différentes étapes mises en oeuvre par l'unité 46 de commande floue à l'aide d'un exemple numérique sur la vitesse mesurée V et sur le diaphragme calculé Di, et ce en se reportant aux figures 9 à 11.

Ainsi, sur la figure 9, la vitesse mesurée V est égale à 0,7 m/s, ce qui correspond à une vitesse "Lente" avec un degré d'appartenance égal à 0,64, "Normale" avec un degré d'appartenance égal à 0,51, et "Rapide" avec un degré d'appartenance égal à 0.

Sur la figure 10, le diaphragme calculé Di est égal à 23 millimètres qui, compte tenu de son calcul suivant le processus utilisé, peut être considéré comme représentatif d'une moquette ou tapis assez épais, avec un sac à poussières peu colmaté. Ce diaphragme calculé Di, figure 10, correspond en fait à un diaphragme "Faible" avec un degré d'appartenance égal à 0, "Moyen" avec un degré d'appartenance égal à 0,42, "Fort" avec un degré d'appartenance égal à 0,9, et "Très fort" avec un degré d'appartenance égal à 0,3.

L'inférence floue utilise présentement la méthode MIN-MAX qui consiste, en premier lieu, à appliquer les règles de commande précitées en prenant pour chaque couple de degrés d'appartenance relevés pour les différents prédicats de la vitesse et du diaphragme, la valeur minimale (équivalente à un ET logique) de ce couple de degrés d'appartenance, et en second lieu, à déterminer le degré d'appartenance de chaque prédicat de la tension de commande en prenant la valeur maximale des valeurs minimales de chaque prédicat de la tension de commande constituant la conclusion de chaque règle précédemment appliquée. Cette inférence floue peut alors être représentée par les deux tableaux suivants :

| DIAPHRAGME / VITESSE | 0 | 0,42 | 0,9 | 0,3 |
|---|---|---|---|---|
| 0,64 | 0 | 0,42 | 0,64 | 0,3 |
| 0,51 | 0 | 0,42 | 0,51 | 0,3 |
| 0 | 0 | 0 | 0 | 0 |

| TENSION ($U_C$) | | | | |
|---|---|---|---|---|
| | TRES FAIBLE | MOYENNE | ASSEZ FORTE | FORTE | TRES FORTE |
| DEGRE | 0,64 | 0,51 | 0,42 | 0,3 | 0 |

Ainsi, d'après ces tableaux, après application de la méthode MIN-MAX, la tension de commande a un prédicat "Très Faible" avec un degré d'appartenance égal à 0,64, un prédicat "Moyenne" avec un degré d'appartenance égal à 0,51, un prédicat "Assez Forte" avec un degré d'appartenance égal à 0,42, un prédicat "Forte" avec un degré d'appartenance égal à 0,3, et un prédicat "Très Forte" avec un degré d'appartenance égal à 0.

La levée du flou, illustrée à la figure 11, consiste, à partir de la fonction d'appartenance de la tension de commande (figure 8) sur laquelle est reporté le degré d'appartenance précédemment déterminé pour chaque prédicat de ladite tension de manière à former une loi de distribution représentée à la figure 11 par les différentes aires hachurées dont l'enveloppe globale est désignée par E, à déterminer la valeur de la tension de commande $U_C$ par exemple par mise en oeuvre de la méthode connue de recherche du centre de gravité de l'aire hachurée globale. Dans l'exemple choisi, figure 11, la tension de commande $U_C$ est égale à 157 volts, et est appliquée au groupe moto-ventilateur, par l'intermédiaire de l'organe de commande 70 (figure 3), de manière à régler la puissance de l'aspirateur pour que l'utilisateur, dans cet exemple, puisse nettoyer la moquette ou tapis du type assez épais, avec un sac à poussières peu colmaté, en exerçant sur l'organe suceur de l'aspirateur un effort de poussée parfaitement acceptable et adapté à ce type de revêtement de sol.

**Revendications**

1. Aspirateur de poussières comportant un boîtier (2) comprenant un compartiment à poussières (11) logeant un sac à poussières (17), et un compartiment d'aspiration (12) communiquant avec le compartiment à poussières (11) par un orifice d'écoulement d'air (15) et comportant un groupe moto-ventilateur (20) ; un tuyau d'aspiration (3 et 5) dont l'une des extrémités communique avec le sac à poussières (17) par un orifice de raccordement (4) pratiqué dans le boîtier (2) et dont l'autre extrémité est couplée à un organe suceur (7) présentant une ouverture d'aspiration (9) ; et un dispositif (30) de commande automatique de la puissance du groupe moto-ventilateur (20) comportant des moyens (50) de détection de la nature du sol et des moyens de commande à logique floue (46), **caractérisé en ce que** le dispositif de commande automatique (30) comporte en outre des moyens (60) de détection du déplacement dynamique de l'organe suceur (7), et les moyens de commande à logique floue (46) sont adaptés à réaliser une inférence floue sur la sortie des moyens (50) de détection de la nature du sol et sur la sortie des moyens (60) de détection du déplacement dynamique de l'organe suceur de manière à commander la puissance du groupe moto-ventilateur (20) suivant le résultat de ladite inférence.

**2.** Aspirateur de poussières selon la revendication 1,
**caractérisé ce que** les moyens (60) de détection du déplacement dynamique de l'organe suceur (7) sont constitués par des moyens de détection de la vitesse moyenne (V) dudit organe suceur (7).

**3.** Aspirateur de poussières selon la revendication 2,
**caractérisé ce que** les moyens (50) de détection de la nature du sol comportant un capteur de la dépression existant entre le groupe moto-ventilateur (20) et le compartiment à poussières (11), le dispositif de commande automatique (30) comporte de plus des moyens (42) permettant de calculer séquentiellement une valeur dite de diaphragme (Di), définie en fonction de l'ouverture d'aspiration (9) de l'organe suceur et représentative de la nature du sol et du degré de colmatage du sac à poussières (17) au moyen d'un calculateur apte à déterminer successivement : le débit d'air du groupe moto-ventilateur à partir d'une première table de correspondance entre la dépression et la tension de commande du groupe moto-ventilateur ; un paramètre dit aéraulique obtenu à partir d'une seconde table de correspondance entre la dépression et le débit d'air ; et le diaphragme corrélé au paramètre aéraulique précédemment déterminé, l'inférence floue utilisant le diaphragme (Di) et la vitesse moyenne (V) de l'organe suceur (7) comme variables d'entrée et élaborant comme variable de commande la tension de commande ($U_C$) du groupe moto-ventilateur (20), cette tension de commande étant appliquée en contre-réaction aux moyens (42) de calcul du diaphragme.

**4.** Aspirateur de poussières selon la revendication 3,
**caractérisé en ce que** le dispositif de commande automatique (30) comporte de plus des premiers moyens (43) de filtrage d'un signal représentatif de la dépression et appliqué aux moyens (42) de calcul du diaphragme, des deuxièmes moyens (44) de filtrage d'un signal représentatif de la tension de commande et appliqué aux moyens (42) de calcul du diaphragme, et des troisièmes moyens (47) de filtrage d'un signal représentatif de la vitesse moyenne de l'organe suceur et appliqué aux moyens de commande à logique floue (46).

**5.** Aspirateur de poussières selon la revendication 4,
**caractérisé en ce que** les moyens (42) de calcul du diaphragme, les moyens de commande à logique floue (46) et les premiers (43), deuxièmes (44) et troisièmes (47) moyens de filtrage sont constitués par un même microcontrôleur (40).

**6.** Aspirateur de poussières selon l'une des revendications 2 à 5,
**caractérisé en ce que** l'organe suceur (7) comportant au moins une roulette (8), les moyens (60) de détection de la vitesse moyenne de l'organe suceur comportent au moins un capteur à effet Hall (61) placé dans l'organe suceur (7), tangentiellement à la roulette (8), ladite roulette (8) étant équipée d'une pluralité d'aimants (62) répartis régulièrement sur sa circonférence.

## Claims

**1.** Vacuum cleaner having a casing (2) comprising a dust compartment (11) housing a dust bag (17), and a suction compartment (12) communicating with the dust compartment (11) through an air flow orifice (15) and containing a motor-fan unit (20) ; a suction pipe (3 and 5), one end of which communicates with the dust bag (17) through a connection orifice (4) formed in the casing (2) and the other end of which is coupled to a nozzle member (7) having a suction opening (9) ; and a device (30) for automatically controlling the power of the motor-fan unit (20) having means (50) of detecting the nature of the floor and fuzzy logic control means (46),
**characterised in that** the automatic control device (30) also includes means (60) of detecting the dynamic movement of the nozzle member (7), and the fuzzy logic control means (46) are adapted to produce a fuzzy inference on the output of the means (50) of detecting the nature of the floor and on the output of the means (60) of detecting the dynamic movement of the nozzle member so as to control the power of the motor-fan unit (20) depending on the result of said inference.

**2.** Vacuum cleaner according to claim 1,
**characterised in that** the means (60) of detecting the dynamic movement of the nozzle member (7) consist of means of detecting the average speed (V) of said nozzle member (7).

3. Vacuum cleaner according to claim 2,
   **characterised in that** the means (50) of detecting the nature of the floor including a sensor for the pressure drop existing between the motor-fan unit (20) and the dust compartment (11), the automatic control device (30) also includes means (42) for sequentially calculating a so-called diaphragm value (Di), defined as a function of the suction opening (9) of the nozzle member and representing the nature of the floor and the degree of clogging of the dust bag (17) by means of a computer suitable for determining successively : the air flow of the motor-fan unit from a first table of correspondence between the pressure drop and the control voltage of the motor-fan unit ; a so-called ventilation parameter obtained from a second table of correspondence between the pressure drop and the air flow ; and the diaphragm correlated with the ventilation parameter previously determined, the fuzzy inference using the diaphragm (Di) and the average speed (V) of the nozzle member (7) as input variables and producing, as the control variable, the control voltage ($U_c$) of the motor-fan unit (20), this control voltage being applied as feedback to the calculation means (42) of the diaphragm.

4. Vacuum cleaner according to claim 3,
   **characterised in that** the automatic control device (30) also has first means (43) of filtering a signal representing the pressure drop and applied to the diaphragm calculation means (42), second means (44) of filtering a signal representing the control voltage and applied to the diaphragm calculation means (42), and third means (47) of filtering a signal representing the average speed of the nozzle member and applied to the fuzzy logic control means (46).

5. Vacuum cleaner according to claim 4,
   **characterised in that** the diaphragm calculation means (42), the fuzzy logic control means (46) and the first (43), second (44) and third (47) filtering means consist of one same microcontroller (40).

6. Vacuum cleaner according to one of claims 2 to 5,
   **characterised in that** the nozzle member (7) having at least one roller (8), the means (60) of detecting the average speed of the nozzle member includes at least one Hall-effect sensor (61) placed in the nozzle member (7), tangentially to the roller (8), said roller (8) being equipped with a plurality of magnets (62) evenly distributed over its circumference.

## Patentansprüche

1. Staubsauger mit einem Gehäuse (2) mit einer Staubabteilung (11), die einen Staubsack (17) aufnimmt, und einer Saugabteilung (12), die mit der Staubabteilung (11) durch eine Luftstromöffhung (15) in Verbindung steht und einen Lüftersatz (20) aufweist, sowie mit einem Saugrohr (3) und (5), von dem eines der Enden mit dem Staubsack (17) durch eine im Gehäuse (2) ausgebildete Anschlußöffnung (4) in Verbindung ist und von dem das andere Ende mit einem Saugelement (7) gekuppelt ist, das eine Ansaugöffnung (9) aufweist; und mit einer Vorrichtung (30) zur automatischen Steuerung der Leistung des Lüftersatzes (20) mit einer Vorrichtung (50) zum Detektieren der Art des Bodens und einer Fuzzy Logic Steuervorrichtung (46), **dadurch gekennzeichnet, daß** die Vorrichtung zur automatischen Steuerung (30) außerdem eine Vorrichtung (60) zum Detektieren der dynamischen Verschiebung des Saugelements (7) aufweist und daß die Fuzzy Logic Steuervorrichtung (46) dazu ausgebildet ist, daß über den Ausgang der Vorrichtung (50) zum Detektieren der Bodenart und über den Ausgang der Vorrichtung (60) zum Detektieren der dynamischen Verschiebung des Saugelements eine Fuzzy-Inferenz realisiert wird, um die Leistung des Lüftersatzes (20) entsprechend dem Ergebnis der Inferenz zu steuern.

2. Staubsauger nach Anspruch 1, **dadurch gekennzeichnet, daß** die Vorrichtung (60) zum Detektieren der dynamischen Verschiebung des Saugelements (7) aus einer Vorrichtung zum Detektieren der mittleren Geschwindigkeit V des Saugelements (7) besteht.

3. Staubsauger nach Anspruch 2, **dadurch gekennzeichnet, daß** die Vorrichtung (50) zum Detektieren der Bodenart einen Sensor für den zwischen dem Lüftersatz (20) und der Staubabteilung (11) vorhandenen Unterdruck aufweist und die automatische Steuervorrichtung (30) außerdem eine Vorrichtung (42) aufweist, welche es ermöglicht, in Sequenz einen sogenannten Diaphragmawert Di, der definiert ist als Funktion der Ansaugöffnung (9) des Saugelements und der repräsentativ ist für die Bodenart und den Grad der Füllung des Staubsacks (17), mittels eines Rechners zu berechnen, der nacheinander bestimmen kann: den Luftdurchsatz des Lüftersatzes ausgehend von einer ersten Tabelle der Entsprechung zwischen dem Unterdruck und der Steuerspannung des Lüftersatzes; einen sogenannten lufttechnischen Parameter, der erhalten wird ausgehend von einer zweiten Tabelle der Entsprechung zwischen dem Unterdruck und dem Luftdurchsatz; und das mit dem zuvor bestimmten lufttechnischen Parameter korrelierte Daphragma, wobei die Fuzzy-Inferenz das Diaphragma Di und die mittlere Geschwindigkeit V des Saugelements (7) als Eingangsvariable verwendet und daraus als Steuerungsvariable die Steuerspannung $U_c$ des Lüftersatzes (20) ermittelt, wobei diese Steuerspannung in Rückkopplung an die Vorrichtung (42) zur Berechnung des Diaphragmas angelegt wird.

4. Staubsauger nach Anspruch 3, **dadurch gekennzeichnet, daß** die automatische Steuervorrichtung (30) außerdem eine erste Vorrichtung (43) zum Filtern eines für den Unterdruck repräsentativen Signals, das an die Vorrichtung (42) zum Berechnen des Diaphragmas angelegt wird, eine zweite Vorrichtung (44) zum Filtern eines für die Steuerspannung repräsentativen Signals, das an die Vorrichtung (42) zur Berechnung des Diaphragmas angelegt wird, und eine dritte Vorrichtung (47) zum Filtern eines für die mittlere Geschwindigkeit des Saugelements repräsentativen Signals, das an die Fuzzy Logic Steuervorrichtung (46) angelegt wird, aufweist.

5. Staubsauger nach Anspruch 4, **dadurch gekennzeichnet, daß** die Vorrichtung (42) zum Berechnen des Diaphragmas, die Fuzzy Logic Steuervorrichtung (46) und die erste Filtervorrichtung (43), zweite Filtervorrichtung (44) und dritte Filtervorrichtung (47) von einem Mikrocontroller (40) gebildet sind.

6. Staubsauger nach einem der Ansprüche 2 bis 5, **dadurch gekennzeichnet, daß** das Saugelement (7) mindestens ein Rad (8) aufweist, und die Vorrichtung (60) zum Detektieren der mittleren Geschwindigkeit des Saugelements mindestens einen Hall-Effekt-Sensor (61) aufweist, der im Saugelement (7) tangential zum Rad (8) angeordnet ist, wobei das Rad (8) mit einer Mehrzahl von regelmäßig über seinen Umfang verteilten Magneten (62) ausgerüstet ist.

# FIG_1

# FIG_2

EP 0 771 167 B1

FIG_3

EP 0 771 167 B1

# FIG_4

60

7    61

62

62    62

62    8

# FIG_5

DEPRESSION
(mmH$_2$O)    2500

2000

$U_c$=220v

1500    $U_c$=200v

$U_c$=180v

$U_c$=160v

1000

$U_c$=120v

500

0

0    10    20    30    40    50    60    DEBIT
(ℓ/s)

FIG_6

FIG_7

FIG_8

14

**FIG_9**

LENTE   NORMALE   RAPIDE

1

0,64
0,51

0

0   0,5 0,7   1   1,5   2   2,5   VITESSE (m/s)
(V)

**FIG_10**

FAIBLE   MOYEN   FORT   TRES FORT

1

0,9

0,42
0,3

0

0   10   20 23   30   40   DIAPHRAGME (mm)
(Di)

**FIG_11**

TRES
FAIBLE   MOYENNE   ASSEZ
FORTE   FORTE   TRES
FORTE

1

0,64   E

0

110   130   150 157   170   190   210   230   TENSION (V)
(Uc)